# EUROPÄISCHE PATENTANMELDUNG

(11) **EP 1 275 982 A2**
(43) Veröffentlichungstag der Anmeldung: **15.01.2003**
(21) Anmeldenummer: 02013111.6
(22) Anmeldetag: 14.06.2002
(51) Int. Cl.: G01T 1/203

(54) **Vorrichtung zur Beschichtung eines Schlauches mit Szintillatormaterial**

(30) Priorität: 11.07.2001 DE 10133796
(71) Anmelder: FORSCHUNGSZENTRUM JÜLICH GMBH, 52425 Jülich (DE)
(72) Erfinder: Ullrich, Werner, Dr., 52428 Jülich (DE); Wenzel, Ulrich, 52428 Jülich (DE)

(57) **Zusammenfassung**

Die Erfindung bezieht sich auf eine einfache und effektive Vorrichtung zur Beschichtung eines Schlauches mit Szintillatormaterial, insbesondere zur Beschichtung eines Durchflußszintillationsmeßschlauches.

Die Vorrichtung umfaßt Mittel zur Erzeugung eines Überdrucks und Mittel zur Erzeugung eines Unterdrucks, die über Preß- und Saugleitungen mit einem Verteiler verbunden sind. Der Verteiler ist mit einem Ende des Schlauchs verbunden. Das andere Ende des Schlauchs befindet sich in einem Vorratsgefäß mit Szintillatormaterial. Schlauch und Vorratsgefäß sind im Einflußbereich einer Heizquelle angeordnet.

Mit der Vorrichtung kann vorteilhaft ohne Veränderung der Anordnung der Schlauch mit Szintillatormaterial befüllt und entleert werden. Dadurch sind alle Verfahren zur Beschichtung mittels einer Druckdifferenz mit einer Vorrichtung durchführbar.

## Beschreibung

Die Erfindung bezieht sich auf eine Vorrichtung zur Beschichtung eines Schlauches, insbesondere zur Beschichtung mit einem Szintillatormaterial.

Zur Messung der Radioaktivität (α- und β-Partikel) in Flüssigkeiten werden Meßzellen eingesetzt, bei denen die zu messende Flüssigkeit durch einen durchsichtigen Schlauch geleitet wird, der im Inneren mit einer Szintillationsschicht belegt ist. Die radioaktiven Teile der Flüssigkeit bewirken in der Szintillationsschicht Lichtblitze, die von außen detektiert werden können und ein Maß für die Radioaktivität in der Flüssigkeit sind.

Aus DE 196 13 971 A1 ist ein Herstellungsverfahren für eine oben genannte Meßzelle beschrieben, bei der ein Schlauch mit einem Innendurchmesser φᵢ > 3 mm verwendet wird. In diesen Schlauch wird streifenförmiges Szintillatormaterial gefüllt, bis zur Schmelze erhitzt und anschließend durch Preßluft entfernt, so daß nur eine dünne Schicht an der Schlauchinnenwand haften bleibt.

Ein weiteres Beschichtungsverfahren für einen Schlauch, dessen Innendurchmesser φᵢ weniger als 3 mm beträgt, ist in DE 197 43 862 C1 beschrieben. Auch hier wird der so hergestellte Schlauch in einer Meßzelle zur Messung der Radioaktivität eingesetzt. Das Szintillatormaterial wird erwärmt und in den Schlauch gedrückt oder gesaugt. Danach wird das Szintillatormaterial aus dem Schlauch gepreßt oder gesaugt, wobei ein dünner Film als Rückstand auf der Schlauchinnenwand verbleibt. Die Dicke des Filmes ist mittels Druck, Temperatur und Zeit während dessen das Szintillatormaterial aus dem Schlauch gesaugt oder gepreßt wird, regulierbar.

Aus DE 199 29 851 C1 ist bekannt, eine Flüssigkeit, durch einen mit Szintillatormaterial gefüllten Schlauch derart zu leiten, daß das Szintillatormaterial bis auf eine dünne an der Innenwand haftende Schicht aus dem Schlauch verdrängt wird. Dadurch entstehen besonders glatte Oberflächen.

Die in DE 197 43 862 C1 bzw. 199 29 851 C1 beschriebenen Verfahren umfassen ein Vorratsgefäß mit Szintillatormaterial sowie eine Heizquelle zum Erwärmen des Szintillatormaterials. Der zu befüllende Schlauch wird durch Über- oder Unterdruck mit Szintillatormaterial befüllt, wobei ein Schlauchende in das Vorratsgefäß eintaucht. Das freie Schlauchende wird dann an eine Überdruckleitung angeschlossen und der flüssige Szintillator via Preßluft aus dem Schlauch gedrückt (DE 197 43 862) oder aber es wird eine Flüssigkeit zur Erzeugung glatter Innenwände durch den Schlauch gezogen.

Nachteilhaft sind die genannten Verfahren umständlich in der Handhabung. Ein Ende des Schlauches muß nach dem Befüllen manuell an eine entsprechende Saug- bzw. Preßleitung angeschlossen werden, da in den beschriebenen Verfahren nur entweder eine Saugleitung oder aber eine Preßleitung vorgesehen ist.

Aufgabe der Erfindung ist es, eine Vorrichtung bereit zu stellen, die die im Stand der Technik aufgezeigten Mängel beseitigt.
Die Aufgabe wird durch eine Vorrichtung nach Anspruch 1 gelöst. Vorteilhafte Ausgestaltungen ergeben sich aus den darauf rückbezogenen Ansprüchen.

Die Vorrichtung umfaßt Mittel zur Erzeugung sowohl eines Überdrucks als auch eines Unterdrucks, sowie Saug- und Preßleitungen, die mit dem Verteiler verbunden sind. Mit dem Verteiler ist auch der zu beschichtende Schlauch verbunden. Das andere Ende des Schlauches befindet sich in einem Vorratsgefäß mit flüssigem Szintillatormaterial.
Schlauch und Vorratsgefäß sind im Einflußbereich einer Heizquelle angeordnet.
Als Heizquelle können insbesondere IR-Lampen, Heißluftgebläse, Heizbänder oder auch Wasserbäder in Frage kommen.

Unter Mitteln sind insbesondere Pumpen zur Erzeugung eines Unterdrucks sowie Kompressoren, und insbesondere Preßluftleitungen zur Erzeugung eines Überdrucks sowie die entsprechenden Preß- und Saugleitungen an den Verteiler gemeint.

Die erfindungsgemäße Vorrichtung führt regelmäßig dazu, daß alle bisher beschriebenen Verfahren zur Beschichtung eines Schlauchs mittels einer Druckdifferenz gleichzeitig angewendet werden können. Die Saug- bzw. Preßleitungen werden hierzu über den Verteiler gesteuert.
Der Schlauch verbleibt an den genannten Mitteln zur Erzeugung der Druckdifferenz, unabhängig davon welches Verfahren zum Befüllen bzw. Entleeren gewählt wird.
Beispielsweise kann der Schlauch zunächst durch Anlegen eines Unterdrucks mit Szintillatormaterial befüllt werden. Durch Schließen der Saugleitung und Öffnen der Preßleitung wird der Schlauch anschließend mit Überdruck entleert. Vorteilhaft umfaßt die Preßleitung Mittel zum Messen bzw. Regeln des Überdruckes. Auch das umgekehrte Verfahren ist anwendbar.

Als Verteiler kann ein Dreiwegeventil vorgesehen sein. Mit dem Dreiwegeventil sind die Preß- und Saugleitungen sowie der zu beschichtende Schlauch verbunden.

In einer weiteren Ausgestaltung der Erfindung ist in der Saugleitung eine Belüftungsquelle angeordnet.
Die Belüftungsquelle entlastet das Mittel zur Erzeugung eines Unterdrucks, z. B. eine Vakuumpumpe. Der Unterdruck kann dadurch definiert eingestellt werden. Ein Unterdruckmeßgerät ist dann in der Leitung angeordnet.

Vorteilhaft ist in der Saugleitung auch ein Abscheidegefäß angeordnet.
Das Abscheidegefäß erhöht die Sicherheit. Das Szintillatormaterial, welches durch Unterdruck aus dem Schlauch gesaugt wird, kann dadurch aufgefangen werden. Das Szintillatormaterial wird anschließend entsorgt bzw. zur Wiederverwendung entnommen. Kosten werden eingespart.

Zwischen zu beschichtendem Schlauch und Verteiler befindet sich ein Verbindungsstück.
Das Verbindungsstück ist außerhalb des Einflußbereiches der Heizquelle angeordnet. Es kann aus dem selben Material bestehen wie der Schlauch. Es weist vorteilhaft einen größeren Innendurchmesser auf als der Schlauch. Dadurch wird ein Durchschlagen des erhitzten, flüssigen Szintillatormaterials an den Verteiler verhindert. Durch Unterdruck angesaugtes Szintillatormaterial tritt von dem zu beschichtenden Schlauch in das Verbindungsstück über und kühlt dort ab. Der Eintritt in das Verbindungsstück wird mit einer UV-Lampe kontrolliert. Auch dieses Szintillatormaterial kann zurückgewonnen werden.

Die erfindungsgemäße Vorrichtung weist vorteilhaft nur Standardmaterialien auf. Die Vorrichtung ist dadurch einfach zu bauen und preiswert.

Im Folgenden wird die Erfindung an Hand eines Ausführungsbeispiels näher erläutert.

Die Vorrichtung enthält einen Preß- und einen Saugteil. Der Preßteil besteht aus einem Preßluftanschluß, einem Feindruckminderer, einem Druckmeßgerät und entsprechenden Leitungen. Der Saugteil setzt sich aus einer Vakuumpumpe, einem Abscheidegefäß, einer Belüftungsvorrichtung, einem Unterdruckmeßgerät und entsprechenden Leitungen zusammen. Druck- und Saugteil sind über ein Dreiwegeventil voneinander getrennt.

Der zu beschichtende Schlauch (Szintillatorschlauch) taucht mit dem einen Ende in das Vorratsgefäß für das Szintillatormaterial und ist mit dem anderen Ende über eine Reduzierverschraubung an ein Verbindungsstück aus durchsichtigem oder durchscheinendem Plastikschlauch angeschlossen. Das Verbindungsstück endet in einer Schnellkupplung, die mit dem Dreiwegeventil verbunden ist. Szintillatorschlauch und Vorratsgefäß befinden sich vollständig in einem beheizten Wasserbad, nicht hingegen das Verbindungsstück.

Zur Beschichtung wird die Saugleitung am Dreiwegeventil geöffnet. Das feste Szintillatormaterial (z. B. Meltilex™) im Szintillatorgefäß ist durch Aufheizen des Wasserbads verflüssigt. Durch Anlegen eines Unterdrucks über die Vakuumpumpe wird der Schlauch vollständig mit flüssigem Szintillator gefüllt. Sobald der Szintillator in das Verbindungsstück dringt, wird der Saugvorgang durch Absperren des Dreiwegeventils beendet. Der Vorgang wird mit einer UV Lampe kontrolliert, da der Szintillator im UV-Bereich fluoresziert. Das Verbindungsstück muß einen wesentlich größeren Innendurchmesser als der Szintillatorschlauch haben, um ein Durchschlagen des flüssigen Szintillators zu verhindern. Nach Beendigung der Beschichtung wird der Saugteil belüftet.

Nun wird die Preßleitung am Dreiwegeventil geöffnet. Der Szintillatorschlauch wird mit Preßluft bei geregeltem Druck ausgeblasen. Das flüssige Szintillatormaterial wird aus dem Schlauch in das Vorratsgefäß zurück gedrückt. Sobald Luft durch die Szintillatorschmelze perlt, werden Schlauch und Gefäß aus dem Wasserbad entfernt, danach der Schlauch aus dem Vorratsgefäß gezogen und dann die Preßluft abgestellt. Ein dünner, durch die kalte Preßluft verfestigter Szintillatorfilm verbleibt an der Schlauchinnenseite.

In einer anderen Variante kann die Beschichtung durch die erfindungsgemäße Vorrichtung ausschließlich über die Saugleitung erfolgen. Nach dem Füllen des Schlauchs mit Szintillator wird der Schlauch aus dem Vorratsgefäß entfernt, verbleibt aber im Wasserbad, so daß der flüssige Szintillator im Schlauch durch Wasser verdrängt wird und sich im Verbindungsstück an der kalten Wand abscheidet. Dazu muß das Verbindungsstück hinreichend lang sein. Durch wenige Versuche zur Ausführbarkeit kann der Fachmann eine entsprechende Länge des Verbindungsstücks herausfinden.
Das Wasser wird im Abscheidegefäß gesammelt. Anschließend wird der Schlauch aus dem Wasserbad entfernt und abgekühlt, wobei ein dünner, fester Szintillatorfilm an der Schlauchinnenseite verbleibt.

Die durch die Vorrichtung beschichtbaren Schläuche sind temperaturbeständig bis zu dem Bereich, in dem ein geeigneter Szintillator flüssig vorliegt und durchsichtig.

Vorteilhaft bedürfen die Einzelteile der erfindungsgemäßen Vorrichtung keiner besonderen Spezifikation. Die im folgenden aufgeführten Angaben über die Einzelteile sind daher beispielhaft:

| | |
|---|---|
| Druckminderer | Drayer Rosenkranz & Droop AG |
| Armaturen | Swagelok |
| Manometer, Bereich 0 - 5 Bar | WIKA |
| Manometer, Bereich 0 - 1Bar | WIKA |
| Wasserbad, 5 L Becherglas | Schott |
| Vorratsgefäß, 20 mL | Packard |
| Abscheidegefäß, | Wulffsche Flasche (Schott) |
| Vakuumpumpe | Leybold |

## Patentansprüche

1. Vorrichtung zur Beschichtung eines Schlauches mit Szintillatormaterial, wobei sich der Schlauch mit einem seiner Enden in einem Vorratsgefäß mit Szintillatormaterial befindet und Schlauch und Vorratsgefäß im Einflußbereich einer Heizquelle angeordnet sind,
**gekennzeichnet durch**
Mittel zur Erzeugung eines Überdruckes und Unterdruckes, die über Leitungen mit einem Verteiler verbunden sind und der Verteiler mit dem Schlauch verbunden ist.

2. Vorrichtung nach Anspruch 1,
**gekennzeichnet durch**
ein Dreiwegeventil als Verteiler.

3. Vorrichtung nach vorhergehendem Anspruch, **dadurch gekennzeichnet, daß** eine Belüftungsquelle in einer Saugleitung angeordnet ist.

4. Vorrichtung nach einem der vorhergehenden Ansprüche, umfassend ein Unterdruckmeßgerät in der Saugleitung.

5. Vorrichtung nach einem der vorhergehenden Ansprüche, umfassend ein Abscheidegefäß in der Saugleitung.

6. Vorrichtung nach einem der vorhergehenden Ansprüche, umfassend ein Verbindungsstück zwischen Schlauch und Verteiler.

7. Vorrichtung nach einem der vorhergehenden Ansprüche, umfassend Mittel zum Messen bzw. Regeln des Druckes in der Preßleitung.
